**Europäisches Patentamt**

**European Patent Office**

**Office européen des brevets**

(11) Veröffentlichungsnummer: **0 294 796 B1**

# EUROPÄISCHE PATENTSCHRIFT

(45) Veröffentlichungstag der Patentschrift: **02.09.92**

(51) Int. Cl.5: **C05F 9/02**

(21) Anmeldenummer: **88109171.4**

(22) Anmeldetag: **09.06.88**

(54) **Kompostaufbereitungsgerät.**

(30) Priorität: **10.06.87 DE 3719277**

(43) Veröffentlichungstag der Anmeldung:
**14.12.88 Patentblatt 88/50**

(45) Bekanntmachung des Hinweises auf die
Patenterteilung:
**02.09.92 Patentblatt 92/36**

(84) Benannte Vertragsstaaten:
**AT BE CH FR GB IT LI NL SE**

(56) Entgegenhaltungen:
**DE-A- 3 206 391**
**DE-A- 3 311 173**
**DE-A- 3 443 946**
**US-A- 4 619 412**

(73) Patentinhaber: **Gail, Josef**
**Klausenweg 4**
**W-8890 Aichach(DE)**

(72) Erfinder: **Gail, Josef**
**Klausenweg 4**
**W-8890 Aichach(DE)**

(74) Vertreter: **Busse & Busse Patentanwälte**
**Postfach 1226 Grosshandelsring 6**
**W-4500 Osnabrück(DE)**

Rank Xerox (UK) Business Services

**Beschreibung**

Die Erfindung bezieht sich auf ein Kompostaufbereitungsgerät in einer Ausbildung gemäß dem Oberbegriff des Anspruchs 1.

Zum Aufsetzen und Umsetzen von Kompostmieten und zum Zerkleinern von organischen Abfällen sind Spezialmaschinen bekannt, wie beispielsweise das in der DE-A-35 17 684 beschriebene Kompostiergerät, bei welchem ein trogartiger Behälter mit einer Fördereinrichtung am Boden und einem Schlagwerk am hinteren Ende des Troges mit einem Schaufellader oder ggf. manuell zu beschicken ist. Die Fördereinrichtung transportiert das eingebrachte Material zum Schlagwerk, wo es zerkleinert und nach hinten so wie eine Miete abgesetzt wird. Bei einem solchen Kompostiergerät ist jedoch für die Beschickung ein relativ hoher Aufwand erforderlich. Zudem ist die umlaufende Fördereinrichtung am Boden des Troges im Falle der Verarbeitung von sperrigen Materialien störanfällig.

Aus der DE-A-15 92 657 ist eine als Durchfahrgerät ausgebildete Maschine zur Verarbeitung von Kompost bekannt, welche mittels einer Fräseirichtung das Material aufnehmen und über Kopf nach hinten schleudern kann. Bei einem solchen auch seitlich an einen Schlepper anzubauenden Gerät verkleinert sich der Querschnitt der Kompostmiete entsprechend der beim Kompostierungsvorgang stattfindenden Volumenverkleinerung des Materials, was jedoch einerseits den Verottungsprozeß ungünstig beeinflußt und zudem die Lagerplatznutzung einschränkt. Aus den in der DE-A-32 06 391 sowie in der DE-B 34 43 946 beschriebenen Vorrichtungen sind Kompostumsetzgeräte bekannt, welche mit einer im Frontanbau an einen Schlepper auf einer horizontalen Achse rotierend angetriebenen Scheibe das Material aufnehmen und seitlich ablegen. Eine Umsetzung von Kompostmieten ist bei diesen Geräten ähnlich wie bei den als Durchfahrgeräten ausgebildeten Maschinen im Schleuderbereich der rotierenden Werkzeuge möglich.

Es ist daher Aufgabe der vorliegenden Erfindung, ein Kompostaufbereitungsgerät der eingangs genannten Art zu schaffen, mit dem die Kompostaufbereitung vom technischen Aufwand her vereinfacht und gleichzeitig ein optimaler Kompostmietenquerschnitt bis zum Abschluß des Verrottungsvorganges aufrecht zu erhalten ist. Zur Lösung dieser Aufgabe zeichnet sich das Kompostaufbereitungsgerät der eingangs genannten Art durch die in Anspruch 1 angegebenen Merkmale aus.

Hieran soll sich die Beschreibung ab Spalte 1, Zeile 46 der A-2 Veröffentlichung (0 294 796-A2) der vorliegenden Anmeldung in unveränderter Formulierung anschließen.

Zum Befüllvorgang der Schaufel kann die Fräsvorrichtung hochgehoben und zum Abfräsen des Schaufelinhaltes abgesenkt werden. Zweckmäßig ist dabei die Schaufelrückwand in Richtung zur Fräsvorrichtung verschiebbar. Zum Aufsetzen oder Umsetzen einer Kompostmiete wird bei angehobenem Fräswerk durch Einfahren der Schaufel in das Kompostmaterial die Schaufel gefüllt. Beim Anheben der Schaufel wird das Fräswerk abgesenkt und der Schaufelinhalt am Platz der neu zu errichtenden Kompostmiete durch die verschiebbare Schaufelrückwand der Fräsvorrichtung zugeführt und abgefräst. Durch die veränderliche Höhenstellung der Schaufel kann die Miete bei geringer Fallhöhe des abgefrästen Kompostmaterials aufgetragen werden, wodurch eine besonders lockere Lagerung der Miete erreicht wird.

Die Ausgestaltung der Erfindung geht aus den Ansprüchen 2 - 8 hervor. Die Fräsvorrichtung kann aus zwei übereinander angeordneten Fräswalzen bestehen, welche bevorzugt beide an der Materialzuführungsseite mit den Fräswerkzeugen nach oben schlagend rotieren.

Im Bereich zwischen den beiden Fräswalzen rotieren die Fräswerkzeuge dadurch einander entgegen, wodurch eine intensive Zerkleinerung beim Abfräsen des Schaufelinhaltes erreicht wird. Das Anheben und Absenken der Fräsvorrichtung und das Verschieben der Schaufelrückwand erfolgt zweckmäßig über hydraulische Stellglieder. Ebenso können die Fräswalzen hydraulisch angetrieben sein. Die verschiebbare Schaufelrückwand ist bei einer soweit kippbaren Schaufel nicht erforderlich, bei welcher der Schaufelinhalt durch sein Eigengewicht der Fräsvorrichtung beim Kippen der Schaufel zugeführt wird.

Im Rahmen der Erfindung kann eine Fräsvorrichtung auch zum Befüllen der Schaufel mit sperrigem Gut, wie beispielsweise Astholz durch ein vorausgehendes Zerkleinern desselben ausgelegt sein.

Die Zerkleinerungseinrichtung, die aus zwei hintereinander angeordneten Fräswalzen besteht, wird dabei auf das zu zerkleinernde Material abgesenkt und durch das Rotieren der Fräswalzen wird dieses in die Schaufel gefördert.

Die Fräswalzenanordnung muß nicht wie auf der Zeichnung quer zur Fahrtrichtung des Fahrzeuges sein, sondern kann auch längs zur Fahrtrichtung sein, wodurch eine seitliche Ablage erfolgt.

Ebenso kann wegen des sehr hohen Kraftbedarfes der Fräswalzen für diese ein vom Transportfahrzeug unabhängiger eigener motorischer Antrieb vorgesehen sein.

Die für die Abfräsung des Schaufelinhaltes vorgesehene Fräseinrichtung kann bei einer Drehrichtungsänderung der Fräswalzen auch zum Befüllen der Schaufel eingesetzt werden. Den übereinander angeordneten Fräswalzen wird dabei das aufzunehmende Material durch Nachrücken mit dem Transportfahrzeug zugeführt.

Die mit der Erfindung erzielten Vorteile bestehen im besonderen darin, daß das Aufsetzen oder Umsetzen von Kompostmieten mit der erforderlich lockeren Ablage des Kompostmaterials im verrottungstechnisch optimalen Mietenquerschnitt von einer Maschine mit einer Arbeitskraft bewerkstelligt werden kann.

Dieses gilt auch für den Zerkleinerungsvorgang von Kompostmaterial. Das meist sehr sperrige und damit schlecht transportfähige Material muß bei dem durch die Erfindung möglichen Arbeitsablauf nicht wie bei den bekannten Einrichtungen technisch und personell aufwendig den Fräswalzen zugeführt werden, sondern die Fräsvorrichtung fährt zum Material. Das Material wird von den Fräswalzen am Liegeplatz erfaßt.

Ausführungsbeispiele mit erfindungsbedeutsamen Einzelheiten sind in der Zeichnung dargestellt und werden im folgenden näher beschrieben.

Es zeigen

Fig. 1: als Kompostaufbereitungsgerät in schematischer Darstellung eine Radlademaschine mit einer Fräsvorrichtung im Fronteinfüllbereich der Transportschaufel in einer Seitenansicht bei der Aufnahme von Kompostmaterial

Fig. 2: das Kompostaufbereitungsgerät nach der Fig. 1 beim Abfräsen des Schaufelinhaltes mit gleichzeitigem Aufsetzen einer Kompostmiete

Fig. 3: das Kompostaufbereitungsgerät beim Zerkleinern von sperrigem Material und gleichzeitigem Befüllen der Transportschaufel

Bei allen Figuren sind zur Vereinfachung der Darstellung die hydraulischen Stellglieder, der Fräswalzenantrieb und die auf der Ansichtsseite befindliche Transportschaufelseitenwand weggelassen.

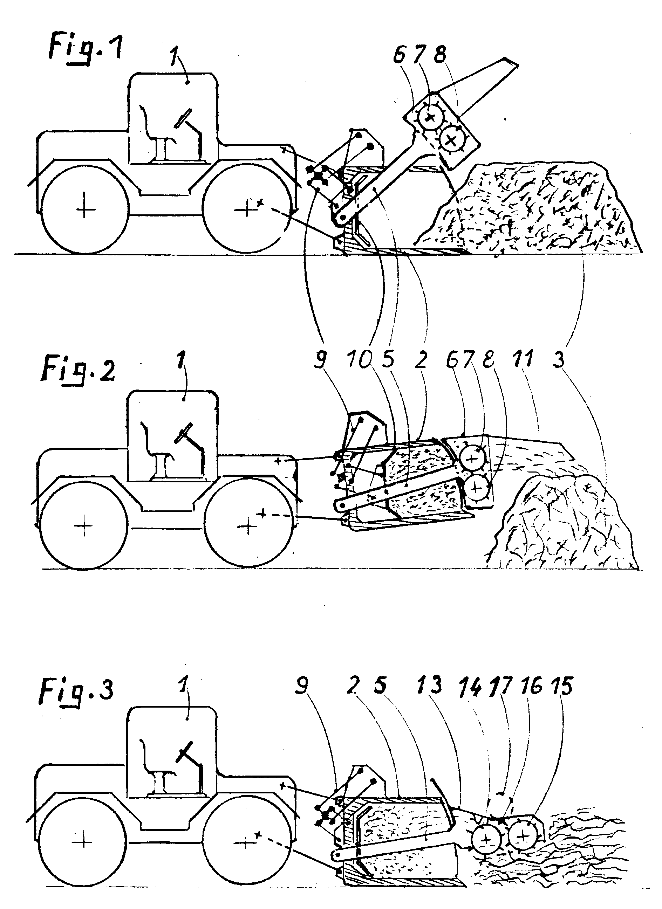

Die Fig. 1 zeigt eine Radlademaschine 1 mit einer Transportschaufel 2 beim Einfahren der Schaufel in eine Kompostmiete 3. Im Frontbereich 4 der Schaufel ist eine über eine Schwinge 5 anheb- und absenkbare Fräsvorrichtung 6 angeordnet, deren Fräswalzen 7, 8 sich über die gesamte Transportschaufelbreite erstrecken. Die Fräswlazen bestehen, wie von Streuwerken bei Stalldüngerstreuern bekannt, aus Schneckanwalzen mit an der Außenkontur am Schneckengang angebrachten Schneidzinken. Das Anheben und Absenken der Fräsvorrichtung erfolgt hydraulisch. Ebenso kann der Antrieb der Fräswalzen hydraulisch erfolgen. Zum Befüllen der Schaufel 2 ist die Fräsvorrichtung angehoben und wird nach der Schaufelfüllung abgesenkt. Am Standort der aufzutragenden Kompostmiete wird, wie in der Fig. 2 gezeigt ist, der Schaufelinhalt durch die Inbetriebnahme der Fräsvorrichtung abgefräst und dabei eine Kompostmiete aufgesetzt. Der Fräsvorrichtung 6 wird der Schaufelinhalt über eine vorteilhaft mit einem Parallelogrammgestänge 9 geführte und hydraulisch betätigbare Schaufelrückwand 1o durch Verschieben derselben zugeführt.

Im Auswurfbereich der Fräsvorrichtung befinden sich Leitwände 11, welche den Streubereich des abgefrästen Materials auf den gewünschten Mietenquerschnitt begrenzen.

Die Fig. 3 zeigt eine Fräsvorrichtung nach der Erfindung beim Zerkleinern von sperrigem Gut, wie beispielsweise Astholz. Die über eine Schwinge 5 heb- und senkbare Fräsvorrichtung 13 im Frontbereich einer Laderschaufel arbeitet dabei zweckmäßig mit zwei horizontal hintereinander angeordneten Fräswalzen 14, 15, welche einander entgegengesetzt an der Unterseite zusammenlaufend angetrieben werden.

Durch Absenken der Fräswalzen 14, 15 auf das zumzerkleinernde Material wird dieses von den Fräswalzen 14, 15 erfaßt, zwischen den Walzen nach oben gefördert, über eine Leitwand 16 umgelenkt und mit der Walze 14 in die Schaufel 2 gefördert.

Anstelle der Leitwand 16 kann auch eine Umlenkwalze 17, als unterbrochener Kreis dargestellt, angeordnet sein, welche ebenfalls mit Zerkleinerungswerkzeugen zur Zerkleinerung beiträgt und die Förderung in die Richtung der Schaufel unterstützt. Zweckmäßig befinden sich im Drehbereich der rotierenden Zerkleinerungswerkzeuge, wie bekannt Gegenschneiden mit einer Ausweichmöglichkeit.

Die Schaufel kann durch Kippen oder eine verschiebbare Rückwand 1o entleert werden. Das Heben und Senken der Fräswalzen erfolgt hydraulisch. Der Antrieb der Fräswalzen 7, 8, 14, 15, 17 kann nach dem Stand der Technik hydraulisch erfolgen oder mechanisch von der Transportfahrzeugzapfwelle auf die Fräswalzen übertragen werden.

Für besonders hohe Antriebsleistungen bei einer leistungsfähigen Zerkleinerungseinrichtung kann zum Antrieb der Fräswalzen 14, 15, 17 auch ein eigener Antriebsmotor vorgesehen sein.

Bei Ausführung eines Kompostaufbereitungsgerätes, welches untergeordnet zum Zerkleinern von Material und überwiegend zum Umsetzen von Kompostmieten eingesetzt werden soll, besteht wegen des dann geringeren Kraftbedarfes die Fräseinrichtung 6 aus einer einzelnen Fräswalze.

Zur einfachen Darstellung der technischen Funktion ist die Fräsvorrichtung 6 mit einer Schwinge 5 heb- und senkbar dargestellt. Bei den rauhen Bedingungen der Kompostbearbeitung ist diese Ausführung auch betriebssicher.

Die Fräsvorrichtung 6 könnte im Rahmen der Erfindung auch an seitlich angebrachten senkrechten Führungen gehoben und gesenkt werden.

**Patentansprüche**

1. Kompostaufbereitungsgerät mit einer eine Schaufel umfassenden Radlademaschine, dadurch gekennzeichnet, daß im Frontbereich der Schaufel (2) eine über eine Schwinge (5) hebund absenkbare Fräsvorrichtung (6,13) angeordnet ist.

2. Kompostaufbereitungsgerät nach Anspruch 1, dadurch gekennzeichnet, daß der Fräsvorrichtung (6) der Schaufelinhalt durch eine verschiebbare Rückwand (10) der Fräsvorrichtung (6) zuführbar ist.

3. Kompostaufbereitungsgerät nach Anspruch 1 oder 2, dadurch gekennzeichnet, daß im Auswurfbereich der Fräsvorrichtung (6) Leitwände (11) vorgesehen sind.

4. Kompostaufbereitungsgerät nach einem der Ansprüche 1 bis 3, dadurch gekennzeichnet, daß die Fräsvorrichtung (6) zwei vertikal übereinander angeordnete sowie gegensinnig antreibbare Fräswalzen (7,8) umfaßt.

5. Kompostaufbereitungsgerät nach einem der Ansprüche 1 bis 4, dadurch gekennzeichnet, daß die Fräsvorrichtung (13) zwei horizontal hintereinander angeordnete Fräswalzen (14,15) hat, welcher einander entgegengesetzt und an der Unterseite zusammenlaufend antreibbar sind.

6. Kompostaufbereitungsgerat nach Anspruch 5, dadurch gekennzeichnet, daß über den Fräswalzen (14,15) eine Leitwand (16) angebracht ist.

7. Kompostaufbereitungsgerat nach Anspruch 5, dadurch gekennzeichnet, daß über den Fräswalzen (14,15) eine Umlenkwalze (17) angeordnet ist.

8. Kompostaufbereitungsgerät nach einem der Ansprüche 1 bis 7, dadurch gekennzeichnet, daß die Fräsvorrichtung (13) einen eigenen Antriebsmotor hat.

**Claims**

1. A compost making apparatus having a wheeled loader comprising a shovel, characterised in that in the front portion of the shovel (2) there is a cutting device (6, 13) which can be raised and lowered by a rocker arm (5).

2. A compost making apparatus according to claim 1, characterised in that the cutting device (6) can be advanced to the contents of the shovel by a displaceable rear wall (10) of the cutting device (6).

3. A compost making apparatus according to claim 1 or 2, characterised in that baffles (11) are provided in the ejection area of the cutting device (6).

4. A compost making apparatus according to claims 1 to 3, characterised in that the cutting device (6) comprises two vertically superimposed and oppositely driveable cutting rollers (7, 8).

5. A compost making apparatus according to one of claims 1 to 4, characterised in that the cutting device (13) has two horizontally and serially disposed cutting rollers (14, 15) which are adapted to be driven in opposite directions to each other and to converge at their under side.

6. A compost making apparatus according to claim 5, characterised in that a baffle (16) is disposed above the cutting rollers (14, 15).

7. A compost making apparatus according to claim 5, characterised in that a deflecting roller (17) is disposed above the cutting rollers (14, 15).

8. A compost making apparatus according to one of claims 1 to 7, characterised in that the cutting device (13) has its own driving motor.

**Revendications**

1. Appareil pour la préparation de compost comportant un chargeur sur roues comprenant une pelle, caractérisé en ce que, dans la zone antérieure de la pelle (2), est installé un dispositif de fraisage (6, 13) élevable et abaissable par l'intermédiaire d'un bras oscillant (5).

2. Appareil pour la préparation de compost suivant la revendication 1, caractérisé en ce que le contenu de la pelle peut être amené au dispositif de fraisage (6) par une paroi postérieure (10) coulissante de la pelle (2).

3. Appareil pour la préparation de compost suivant la revendication 1 ou 2, caractérisé en ce que des parois de guidage (11) sont prévues dans la zone d'éjection du dispositif de fraisage (6).

4. Appareil pour la préparation de compost suivant l'une quelconque des revendications 1 à 3, caractérisé en ce que le dispositif de fraisage (6) comporte deux rouleaux de fraisage (7, 8) disposés verticalement l'un au-dessus de l'autre et pouvant être entraînés en sens opposés.

5. Appareil pour la préparation de compost suivant l'une quelconque des revendications 1 à 4, caractérisé en ce que le dispositif de fraisage (13) comporte deux rouleaux de fraisage (14, 15) disposés horizontalement l'un derrière l'autre qui peuvent être entraînés en sens opposés avec convergence à leur partie inférieure.

6. Appareil pour la préparation de compost suivant la revendication 5, caractérisé en ce qu'une paroi de guidage (16) est montée au-dessus des rouleaux de fraisage (14, 15).

7. Appareil pour la préparation de compost suivant la revendication 5, caractérisé en ce qu'un rouleau de déviation (17) est monté au-dessus des rouleaux de fraisage (14, 15).

8. Appareil pour la préparation de compost suivant l'une quelconque des revendications 1 à 7, caractérisé en ce que le dispositif de fraisage (13) comporte un moteur d'entraînement propre.

Fig.1

Fig.2

Fig.3